# EUROPEAN PATENT SPECIFICATION

(11) **EP 3 893 099 B1**
(45) Date of publication and mention of the grant of the patent: **15.10.2025**
(21) Application number: 19891843.5
(22) Date of filing: 30.10.2019
(51) Int. Cl.: G06F 3/01, G06F 3/0488, G06F 3/04883, G06F 3/04815, G06F 3/04845, G02B 30/56, A63F 13/00

(54) **INTERACTION CONTROL METHOD, STORAGE MEDIUM AND ELECTRONIC APPARATUS**
VERFAHREN ZUR INTERAKTIONSSTEUERUNG, SPEICHERMEDIUM UND ELEKTRONISCHES GERÄT
PROCÉDÉ DE COMMANDE D'INTERACTION, SUPPORT DE MÉMOIRE ET APPAREIL ÉLECTRONIQUE

(30) Priority: 04.12.2018 CN 201811475755
(43) Date of publication of application: 13.10.2021
(73) Proprietor: Tencent Technology (Shenzhen) Company Limited, Shenzhen, Guangdong, 518057 (CN)
(72) Inventor: JOSHI, Dhaval·jitendra, Shenzhen, Guangdong 518057 (CN); CHEN, Xiaomei, Shenzhen, Guangdong 518057 (CN); WU, Wenjie, Shenzhen, Guangdong 518057 (CN); CHEN, Jingzhou, Shenzhen, Guangdong 518057 (CN)
(74) Representative: Novagraaf International SA
(86) International application number: PCT/CN2019/114396
(87) International publication number: WO 2020/114157

(56) References cited:
- EP-A1- 3 116 616
- WO-A1-2016/075437
- CN-A- 103 902 124
- CN-A- 106 612 423
- CN-A- 107 831 905
- CN-A- 107 908 385
- CN-A- 110 147 196
- US-A1- 2013 139 062

## Description

### RELATED APPLICATION

This application claims priority to Chinese Patent Application No. 201811475755.1, filed with the China National Intellectual Property Administration on December 4, 2018, and titled "INTERACTIVE CONTROL METHOD AND APPARATUS, STORAGE MEDIUM, AND ELECTRONIC DEVICE".

### FIELD OF THE TECHNOLOGY

This application relates to the field of computers, and in particular, to interactive control.

### BACKGROUND OF THE DISCLOSURE

With the continuous development of virtual imaging technology, some application developers begin to produce a holographic projection device by using three-dimensional holographic projection technology powered by artificial intelligence (AI). The holographic projection device may display a holographic projection-based virtual character that performs real-time information interaction with a user. After interaction with the user multiple times, the holographic projection-based virtual character can learn the user's hobbies and habits and accurately respond in time to an instruction issued by the user and can also gradually develop a unique character personality. For example, CN103 902 124A discloses a three-dimensional holographic interaction system based on track recognition and a control method of the three-dimensional holographic interaction system, and the control method includes the steps that S1, capacitance changes of a touch screen are detected in real time to recognize a touching track; S2, the recognized touching track is analyzed to obtain a corresponding control instruction; S3, a three-dimensional holographic projection object is controlled to execute corresponding actions according to the obtained control instruction. CN107 831 905A provides discloses a virtual image interaction method and system based on front-projected holographic display equipment, where the method includes the steps of: obtaining, by a mobile device/an imaging device, multi-mode input data; parsing, by a cloud server, the multi-mode input data to obtain a parsing result, the parsing including: natural language interpretation, visual sensing, touch sensing, language and audio output and emotion calculations; determining multi-mode output data according to the parsing result; and controlling, by the mobile device, output of the multi-mode output data, and displaying, by the imaging device, the virtual character. CN 107 908 385A provides a multi-mode interaction system based on holography, and the system comprises a mobile device which is used for loading and operating a virtual image, where the mobile device is configured with a multi-mode interaction mode, is interconnected with a cloud brain and generates and controls to output multi-mode output data through analysis and computing of the cloud brain; an imaging device which is used for converting the specific virtual image into a holographic image, displaying the holographic image in a preset area and outputting the holographic image and the display data in the multi-mode output data; and a supporting body which is used for bearing the mobile device and the imaging device. WO 2016/075437A1 discloses an image display system (10) which includes a three-dimensional digital holographic image (4) and an image projection device (18) for generating and projecting a virtual image (20). EP 3 116 616A1 relates to a method for enhancing detection of a user's hand relative to a head-mounted display (HMD), and the method includes sensing a disrupted portion of energy by sensors integrated within a pad device, repeating the sensing continuously to produce a stream of energy images, and communicating the stream of energy images to a game console for processing each of the energy images to produce a model of the hand and movement of the model of the hand. CN 110 147 196A discloses an interaction control method and device, a storage medium and an electronic device, and the interaction control method includes the steps: recognizing touch operation executed on a touch pad arranged on holographic projection equipment, wherein the holographic projection equipment is used for presenting holographic projection virtual characters; generating an interaction request according to the recognized touch operation, wherein the interaction request is used for requesting interaction with the holographic projection virtual characters; and controlling the holographic projection virtual characters to execute an interaction action matching the interaction request. CN 106 612 423A discloses a touch control method and device for a projection image, and relates to the technical field of projection, and the touch control method and device are applied to projection equipment including a touch pad and a display screen. US 2013/139062 A1 discloses a mobile communication device and method for controlling a user interface of the mobile communication device are disclosed, and the method includes generating a multi-page graphical user interface that enables a user of the mobile communication device to control operations of the mobile communication device, displaying a current page of the multi-page user interface, changing the current page of the multi-page user interface that is displayed in response to a user action, and projecting an audible sound for each page of the multi-page user interface that is displayed.

However, how to effectively implement interactive control between the user and the holographic projection-based virtual character in the holographic projection device is still a technical problem that urgently needs to be resolved.

### SUMMARY

Embodiments of this application provide an interactive control method, a storage medium, and an electronic device, which can effectively implement interactive control between a user and a holographic projection-based virtual character in a holographic projection device.

According to an aspect of the embodiments of this application, an interactive control method according to claim 1 is provided, including: recognizing, by a holographic projection device, a touch operation performed on a touch panel, the holographic projection device being configured to display a holographic projection-based virtual character, the touch panel being disposed on the holographic projection device; generating, by the holographic projection device, an interaction request according to the recognized touch operation, the interaction request being used for requesting interaction with the holographic projection-based virtual character; and controlling, by the holographic projection device, the holographic projection-based virtual character to perform an interactive action matching the interaction request. The recognizing, by the holographic projection device, the touch operation performed on the touch panel includes: obtaining, by the holographic projection device, touch information generated by interaction between a touch point corresponding to the touch operation and the touch panel; and recognizing, by the holographic projection device, the touch operation according to the touch information. The recognizing, by the holographic projection device, the touch operation according to the touch information includes inter alia: determining, by the holographic projection device in a case that it is determined according to the touch information that the number of slide actions performed on the touch panel by the touch point is greater than a first threshold, that the touch operation indicates a caress operation on the holographic projection-based virtual character, the slide action being an action in which a movement distance of the touch point on the touch panel is greater than a second threshold; and determining, by the holographic projection device in a case that it is determined according to the touch information that the movement distance of the touch point on the touch panel is less than a third threshold and action duration of the touch point on the touch panel is less than a fourth threshold, that the touch operation indicates a pat operation on the holographic projection-based virtual character.

According to yet another aspect of the embodiments of this application, a storage medium is further provided, the storage medium storing a computer program, the computer program being configured to perform, when being run, the foregoing interactive control method.

According to yet another aspect of the embodiments of this application, an electronic device is further provided, including a memory and a processor, the memory storing a computer program, the processor being configured to perform the foregoing interactive control method by using the computer program.

In the embodiments of this application, a touch operation performed on a touch panel that is disposed on a holographic projection device is recognized, the holographic projection device being configured to display a holographic projection-based virtual character (or role); an interaction request is generated according to the recognized touch operation, the interaction request being used for requesting interaction with the holographic projection-based virtual character; and the holographic projection-based virtual character is controlled to perform an interactive action matching the interaction request. In a process of controlling the holographic projection device, the touch operation is received by the touch panel, and an operation is performed on the holographic projection device according to the touch operation, so that interaction with the holographic projection-based virtual character in the holographic projection device can be performed fast and accurately according to the touch operation received by the touch panel, and the technical effect of flexible, accurate, and efficient control of a virtual partner is achieved, thereby resolving the technical problem that the virtual partner in the related art has monotonous control modes.

### BRIEF DESCRIPTION OF THE DRAWINGS

The accompanying drawings described herein are used for providing a further understanding of this application, and form a part of this application. Exemplary embodiments of this application and descriptions thereof are used for explaining this application, and do not constitute any inappropriate limitation to this application. In the accompanying drawings:
FIG. 1 is a schematic diagram of an application environment of an exemplary interactive control method according to an embodiment of this application.
FIG. 2 is a schematic flowchart of an exemplary interactive control method according to an embodiment of this application.
FIG. 3 is a schematic diagram of an exemplary interactive control method according to an embodiment of this application.
FIG. 4 is a schematic diagram of another exemplary interactive control method according to an embodiment of this application.
FIG. 5 is a schematic flowchart of another exemplary interactive control method according to an embodiment of this application.
FIG. 6 is a schematic flowchart of yet another exemplary interactive control method according to an embodiment of this application.
FIG. 7 is a schematic diagram of yet another exemplary interactive control method according to an embodiment of this application.
FIG. 8 is a schematic diagram of yet another exemplary interactive control method according to an embodiment of this application.
FIG. 9 is a schematic diagram of yet another exemplary interactive control method according to an embodiment of this application.
FIG. 10 is a schematic diagram of yet another exemplary interactive control method according to an embodiment of this application.
FIG. 11 is a schematic structural diagram of an exemplary holographic projection device according to an embodiment of this application.
FIG. 12 is a schematic diagram of an exemplary holographic projection device according to an embodiment of this application.
FIG. 13 is a schematic structural diagram of an exemplary interactive control apparatus according to an embodiment of this application.

### DESCRIPTION OF EMBODIMENTS

To make a person skilled in the art better understand solutions of this application, the following clearly and completely describes the technical solutions in the embodiments of this application with reference to the accompanying drawings in the embodiments of this application. Apparently, the described embodiments are merely some rather than all of the embodiments of this application. The invention is defined by the appended independent claims.

It should be noted that in the specification, claims, and accompanying drawings of this application, the terms "first", "second", and so on are intended to distinguish between similar objects rather than describe a specific order or sequence. It is to be understood that the data termed in this way are interchangeable in a proper case, so that the embodiments of this application described herein can be implemented in other orders than the orders illustrated or described herein. Moreover, the terms "include", "have" and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, product, or device.

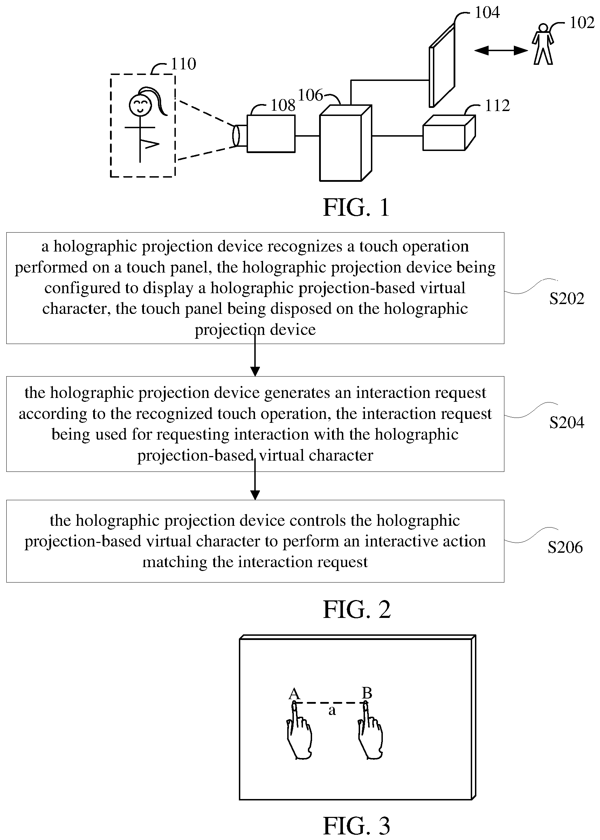

According to an aspect of the embodiments of this application, an interactive control method is provided. In an implementation, the foregoing interactive control method may be applied to, but is not limited to, an environment shown in FIG. 1. A user 102 may perform a touch operation on a touch panel 104, and a host 106 recognizes the touch operation after obtaining the touch operation received by the touch panel 104, and generates an interaction request according to a recognition result. The host 106 controls, according to the interaction request, a holographic projection-based virtual character (or role) 110 projected by a projector 108 to perform an interactive action matching the interaction request. In this device, a battery 112 is configured to power the whole device.

It should be noted that FIG. 1 is merely an example of a hardware structure, and does not constitute a limitation on this embodiment. The touch panel 104 and the projector 108 may exist separately. In this case, the touch panel 104 transmits a touch signal to the host 106 by using a signal transmission device connected to the touch panel 104. The projector 108 receives a to-be-projected interactive action from the host 106 by using a signal receiving apparatus.

It should be noted that in the related art, in a case that a holographic projection-based virtual character is displayed by using a holographic projection device, a client or a speech instruction is usually used for interacting with the holographic projection device. However, the foregoing method for interacting with the holographic projection device has monotonous control instructions, and the holographic projection device can only make simple responses. By contrast, in this embodiment, a touch operation is obtained by using a touch panel, the touch operation is recognized, an interaction request is generated according to the recognized touch operation, and an interactive action matching the interaction request is performed according to the interaction request. In the foregoing method, a holographic projection device can be directly controlled by using a touch operation received by a touch panel, thereby enriching instructions for controlling the holographic projection device, and improving the flexibility of the interaction with a holographic projection-based virtual character.

For convenience of understanding and explaining the interactive control method provided in this embodiment of this application, the description is made with reference to FIG. 2 below. The interactive control method provided in this embodiment of this application may be applied to a holographic projection device, and in an implementation, the interactive control method may include the following steps S202 to S206.

In step S202, a holographic projection device recognizes a touch operation performed on a touch panel, the holographic projection device being configured to display a holographic projection-based virtual character, the touch panel being disposed on the holographic projection device.

In step S204, the holographic projection device generates an interaction request according to the recognized touch operation, the interaction request being used for requesting interaction with the holographic projection-based virtual character.

In step S206, the holographic projection device controls the holographic projection-based virtual character to perform an interactive action matching the interaction request.

The foregoing interactive control method may be applied to, but is not limited to, a process of interacting with the holographic projection-based virtual character in the holographic projection device. For example, the foregoing interactive control method may be applied to a process of interacting with a projected holographic virtual cartoon figure, and may also be applied to a process of interacting with a projected holographic virtual building.

For convenience of understanding and description, an example in which the interactive control method is applied to the process of interacting with a holographic virtual cartoon figure projected by the holographic projection device is used for description. In a case that the holographic virtual cartoon figure is projected by the holographic projection device, a user may observe the holographic virtual cartoon figure. In this case, after the user touches the touch panel to generate a touch operation, the holographic projection device recognizes the touch operation, generates an interaction request, and controls the holographic virtual cartoon figure according to the interaction request to perform an interactive action (for example, becoming shy) matching the interaction request. In this case, the user can see the holographic virtual cartoon figure performing the interactive action, thereby completing the interaction between the user and the holographic virtual cartoon figure.

In this embodiment, the holographic projection device uses a control method in which a touch operation is first obtained by using a touch panel so as to recognize the touch operation and an interaction request is then generated according to the recognized touch operation so as to perform an interactive action matching the interaction request according to the interaction request. In the control method, the holographic projection device can be directly controlled by using a touch operation received by a touch panel, thereby enriching instructions for controlling the holographic projection device, and improving the flexibility of the interaction with a holographic projection-based virtual character.

The interactive action may include, but is not limited to, a body movement of the holographic projection-based virtual character and/or a voice of the holographic projection-based virtual character. For example, the "controlling the holographic projection-based virtual character to perform an interactive action matching the interaction request" may be: controlling the holographic projection-based virtual character to play an animation matching the interaction request; and/or, controlling the holographic projection-based virtual character to play an audio matching the interaction request.

The controlling the holographic projection-based virtual character to play an audio may include, but is not limited to, controlling a mouth of the holographic projection-based virtual character to change and simultaneously playing the audio by using a sound playing apparatus.

The touch operation may be obtained by using touch information generated by interaction between a touch point and the touch panel. After the touch information is obtained, the touch operation is recognized according to the touch information.

The touch information may include, but is not limited to, at least one of the following: touch action duration of the touch point, a touch trajectory of the touch point, and a touch position of the touch point.

The touch point may include, but is not limited to, a position of contact between a human body or a tool used by a human body and the touch panel. The human body may be, but is not limited to, any part such as a finger, a palm, the back of a hand, a nail, the forehead, the chin, a cheek or any other part of a human. The touch point may be, but is not limited to, a plurality of touch points. For example, in a case that the palm touches the touch panel, a plurality of touch points is formed. The plurality of touch points is synchronized and act in accordance with each other. In a case that the finger touches a touch screen, one touch point is formed. The touch information may be, but is not limited to, movement information of the touch point or time information of the touch point. For example, an example in which the touch point is a position of contact between the finger and the touch screen is used for description. The finger may move when it is in contact with the touch panel, thereby leaving a trajectory on the touch screen; or the finger contacts the touch screen for a single time and leaves in a short time, so as to perform a click operation on the touch screen. In this way, the trajectory or the click operation may be used as the touch information, to recognize the touch operation according to the touch information.

Recognizing, by the holographic projection device, the touch operation according to the touch information includes:
(1) determining, by the holographic projection device, that the touch operation indicates a caress operation on the holographic projection-based virtual character in a case that the touch information indicates that the number of slide actions performed on the touch panel by the touch point is greater than a first threshold, where an action in which a movement distance of the touch point on the touch panel is greater than a second threshold is recognized as a slide action; and
(2) in a case that the touch information indicates that the movement distance of the touch point on the touch panel is less than a third threshold and action duration of the touch point on the touch panel is less than a fourth threshold, determining, by the holographic projection device, that the touch operation indicates a pat operation on the holographic projection-based virtual character.

The first threshold, second threshold, third threshold, and fourth threshold may be, but not limited to, set according to empirical values. For example, the touch point is formed through contact between the finger and the touch panel. As shown in FIG. 3, after the finger touches the touch panel to form a touch point A, the finger moves from the touch point A to a touch point B, a movement distance being a. A relationship between a and the second threshold is determined, and in a case that a is greater than or equal to the second threshold, it indicates that a current operation is a slide operation. In a case that a is less than the third threshold, it indicates that the current operation is not a slide operation but is subject to further determination with additional conditions. The action duration may include, but is not limited to, duration of existence of the touch point for a single time. For example, in a case that the finger touches the touch panel for one second, the action duration is one second.

Further, after it is determined that the current operation is a slide operation, in a case that a plurality of slide operations is received, the number of the received slide operations is determined. In a case that the number of the slide operations is greater than the first threshold, the holographic projection device may determine by calculation that the user performs a plurality of slide operations on the touch panel. In this case, the holographic projection device may determine that the user is performing a caress operation. In a case that the current operation is not a slide operation and the action duration of the current operation is less than the fourth threshold, the holographic projection device may determine by calculation that the user performs a single short-time touch operation on the touch panel. In this case, the holographic projection device may determine that the user is performing a pat action.

Determining, by holographic projection device, that the touch operation indicates a caress operation on the holographic projection-based virtual character may include, but is not limited to, the following: obtaining, by the holographic projection device, a first position at which the touch point stays on the touch panel at a first moment and a second position at which the touch point stays on the touch panel at a second moment, a time interval from the first moment to the second moment being a frame period; recognizing, by the holographic projection device in a case that a distance between the first position and the second position is greater than the second threshold, an action in which the touch point moves from the first position to the second position as a slide action, and adding one to the number of slide actions; and determining, by the holographic projection device in a case that the number of slide actions is greater than the first threshold, that the touch operation indicates a caress operation on the holographic projection-based virtual character.

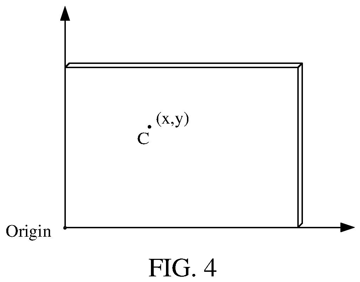

The method may include, but is not limited to, adding coordinate information to the touch screen. For example, FIG. 4 shows a touch node of the touch screen. A plane rectangular coordinate system is set with the lower left corner of the touch screen as the origin and the touch screen as the plane. Any point on the touch screen can have a coordinate value. For example, the coordinates of a point C are (x, y), x and y being positive numbers.

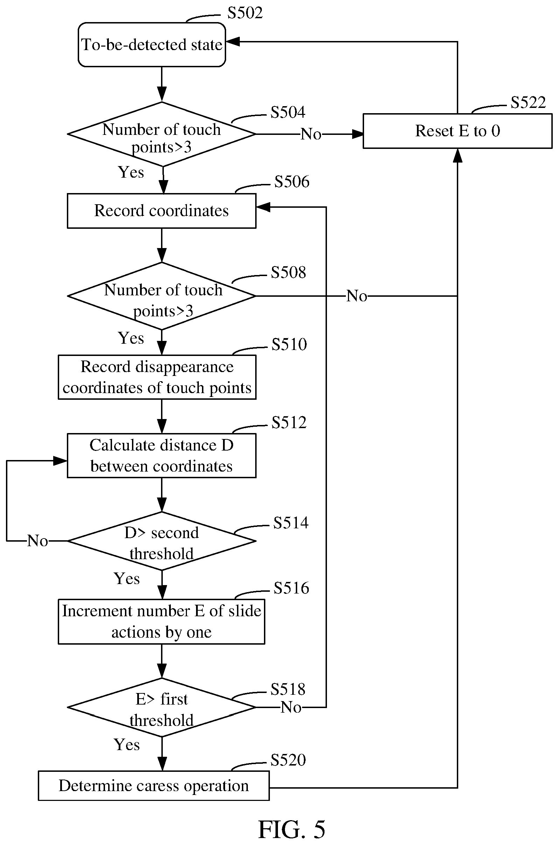

A case that the palm touches the touch screen is described with reference to FIG. 5. In a case that it is determined that the touch panel is in a to-be-detected state (that is, S502), the palm touches the touch panel. It is determined in S504 whether the number of touch points is greater than 3, and in a case that the number of touch points is greater than 3, the coordinates of the touch points are recorded in S506. In this case, the coordinates of one of the touch points may be chosen and recorded, or the coordinates of all the touch points may be recorded. When the touch points disappear, it is determined in S508 whether the number of the touch points is greater than 3 before the touch points disappear, and in a case that the number of the touch points is greater than 3, coordinates where the touch points disappear are recorded in S510. In this case, a touch point whose start coordinates are recorded may be chosen and disappearance coordinates of the touch point are recorded, or disappearance coordinates of all the touch points may be recorded. The start coordinates and disappearance coordinates of each touch point correspond to each other. A distance D between the start coordinates and the disappearance coordinates of a touch point is calculated in S512, and it is determined in S514 whether D is greater than the second threshold. In a case that D is greater than the second threshold, the number E of slide actions is incremented by one in S516. It is determined in S518 whether E is greater than the first threshold, and in a case that E is greater than the first threshold, it is determined that a currently performed action is a caress operation. In this process, in a case that the numbers of the touch points in S504 and S508 are not greater than 3 or after it is determined that the current action is a caress operation, S522 is performed, where E is reset to 0. It should be noted that the number 3 as referred to in determining whether the number of the touch points is greater than 3 may be set flexibly. In addition, the foregoing process is a process of determining whether the palm is performing a caress operation. In a case of determining whether the finger (or another part) is performing a caress operation, steps S504 and S508 in the process in FIG. 5 may be deleted, which is however not limited thereto, so that it is not necessary to determine whether the number of the touch points is greater than 3. In this case, it can be determined whether a current operation is a caress operation by the remaining steps in FIG. 5.

Determining, by holographic projection device, that the touch operation indicates a pat operation on the holographic projection-based virtual character may include, but is not limited to, the following: obtaining, by the holographic projection device, a third position at which the touch point stays on the touch panel at a third moment and a fourth position at which the touch point stays on the touch panel at a fourth moment; and determining, by the holographic projection device in a case that a distance between the third position and the fourth position is less than the third threshold and a time interval from the third moment to the fourth moment is less than the fourth threshold, that the touch operation indicates a pat operation on the holographic projection-based virtual character.

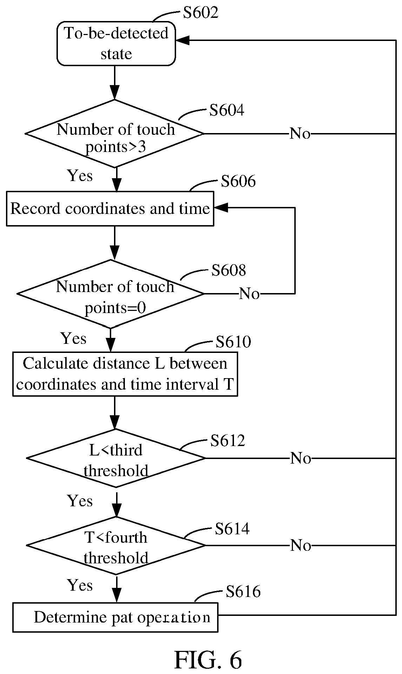

For example, the description is provided below with reference to FIG. 6. For example, the touch operation is an operation performed on the touch panel by the palm. In a case that it is determined that the touch panel is in a to-be-detected state (that is, S602), after the palm touches the touch panel, it is determined in S604 whether the number of the touch points is greater than 3, and in a case that the number of the touch points is greater than 3, coordinates and a generation moment of one touch point or coordinates and generation moments of all the touch points are recorded in S606. It is determined in S608 whether the number of the touch points is equal to 0, and in a case that the number of the touch points is equal to 0, disappearance coordinates and a disappearance moment of the one touch point or disappearance coordinates and disappearance moments of all the touch points are recorded, and a distance L between the coordinates of the touch point (that is, a distance between start coordinates and the disappearance coordinates of the touch point), and a time interval T from the generation moment and the disappearance moment of the touch point are calculated in S610. It is determined in S612 whether L is less than the third threshold, and it is determined in S614 whether T is less than the fourth threshold. In a case that L is less than the third threshold and T is less than the fourth threshold, it is determined in S616 that the current operation is a pat operation. In a case that L is greater than or equal to the third threshold, or T is greater than or equal to the fourth threshold, or it is determined that the current action is a pat operation, the touch panel enters the to-be-detected state in S602 again. In addition, in a case that the touch point does not disappear in a detection process, the position of the touch point and a current moment are periodically recorded.

After the recognizing, by the holographic projection device, the touch operation according to the touch information, the method further includes: obtaining, by the holographic projection device, an action region of interaction between the touch point and the touch panel; and determining, by the holographic projection device according to a position of the action region on the touch panel, interactive information requested by the interaction request.

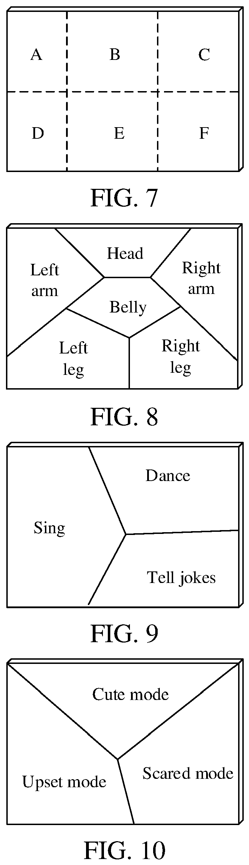

For example, as shown in FIG. 7, the touch panel is divided into six regions, A, B, C, D, E, and F, and interactions in different regions correspond to different interactive information.

After the touch panel is divided into different regions, the sizes and shapes of the regions may be the same or different, and the number of the divided regions may be any positive number greater than or equal to 1.

The determining, by the holographic projection device according to a position of the action region on the touch panel, interactive information requested by the interaction request includes either or both of the following two steps (1) and (2).

In step (1), the holographic projection device determines, according to the position of the action region on the touch panel, a character part of the holographic projection-based virtual character for the interaction, and determines, according to the character part, the interactive information requested by the interaction request.

The method may include, but is not limited to, dividing the touch panel into different regions, and different regions represent different character parts. For example, as shown in FIG. 8, the touch panel is divided into six regions, and the regions respectively correspond to the head, the left arm, the right arm, the belly, the left leg, and the right leg. Touching different regions indicates interacting with different body parts of the character, for example, patting the head or caressing the belly.

In step (2), the holographic projection device determines, according to the position of the action region on the touch panel, an interaction type of the interaction with the holographic projection-based virtual character, and determines, according to the interaction type, the interactive information requested by the interaction request.

The interaction type may include, but is not limited to, an interaction form or an interaction mode. The interaction form may include, but is not limited to, an action performed by the character or a sound played by the character, and the interaction mode may include, but is not limited to, a current mode of the character.

The mode may include, but is not limited to, a plurality of modes of imitative human emotions, for example, a shy mode, an upset mode, a scared mode, and a cute mode.

For example, in FIG. 9, different positions of the touch panel are set for different interaction forms (for example, dancing or singing). Moreover, in FIG. 10, different positions of the touch panel are set for different modes of imitative human emotions (for example, a shy mode and a cute mode).

The interactive control method further includes: adjusting, by the holographic projection device, an affection parameter of the holographic projection-based virtual character; and in a case that it is determined that the affection parameter reaches a target value, controlling, by the holographic projection device, a character response mode of the holographic projection-based virtual character, and/or, enabling, by the holographic projection device, a hidden skill of the holographic projection-based virtual character in a virtual scene.

It should be noted that in this embodiment of this application, an execution time of the adjusting, by the holographic projection device, an affection parameter of the holographic projection-based virtual character is not limited, which, for example, may be performed when controlling the holographic projection-based virtual character to perform an interactive action matching the interaction request.

The affection parameter may be indicated by using a number or in a form such as the number of red hearts or an energy value. The hidden skill may include, but is not limited to, a new animation, a new sound or a new phase. For example, the hidden skill is a new animation. After the affection parameter reaches a particular value, the character may be allowed to play the new animation. In a case that the affection parameter does not reach the particular value, the character is not allowed to play the new animation.

According to this embodiment, a holographic projection device performs a method in which a touch operation is obtained by using a touch panel so as to recognize the touch operation, an interaction request is generated according to the recognized touch operation, and an interactive action matching the interaction request is performed according to the interaction request. In the foregoing method, the holographic projection device can be directly controlled by using a touch operation received by a touch panel, thereby enriching instructions for controlling the holographic projection device, and improving the flexibility of the interaction with a holographic projection-based virtual character.

Based on the scenario described above, different implementations of the interactive control method provided in the embodiments of this application are described below in detail with reference to the scenario.

In an implementation, recognizing, by the holographic projection device, the touch operation performed on the touch panel disposed on the holographic projection device includes the following steps 1 and 2.

In step 1, the holographic projection device obtains the touch information generated by the interaction between the touch point corresponding to the touch operation and the touch panel.

In step 2, the holographic projection device recognizes the touch operation according to the touch information.

For example, the finger interacts with the touch panel. After the finger touches the touch panel, the position of the touch is the touch point. When the finger moves, the touch point will move accordingly. A movement trajectory of the touch point, touch action duration of the finger, and the position of the touch point are obtained and used as the touch information. The touch operation is recognized according to the touch information.

According to this embodiment, the touch information generated by the interaction between the touch point corresponding to the touch operation and the touch panel is obtained, and the touch operation is recognized according to the touch information, thereby improving the flexibility of controlling the holographic projection device.

In an implementation, the recognizing, by the holographic projection device, the touch operation according to the touch information includes the following steps 1 and 2.

In step 1, the holographic projection device determines, in a case that it is determined according to the touch information that the number of slide actions performed on the touch panel by the touch point is greater than a first threshold, that the touch operation indicates a caress operation on the holographic projection-based virtual character, the slide action being an action in which a movement distance of the touch point on the touch panel is greater than a second threshold.

In step 2, the holographic projection device determines, in a case that it is determined according to the touch information that the movement distance of the touch point on the touch panel is less than a third threshold and action duration of the touch point on the touch panel is less than a fourth threshold, that the touch operation indicates a pat operation on the holographic projection-based virtual character.

The first threshold, second threshold, third threshold, and fourth threshold may be, but not limited to, set according to empirical values. For example, the touch point is formed through contact between the finger and the touch panel. As shown in FIG. 3, after the finger touches the touch panel to form a touch point A, the finger moves from the touch point A to a touch point B, a movement distance being a. A relationship between a and the second threshold is determined, and in a case that a is greater than or equal to the second threshold, it indicates that the current operation is a slide operation. In a case that a is less than the third threshold, it indicates that the current operation is not a slide operation but is subject to determination with additional conditions. The action duration may include, but is not limited to, duration of existence of the touch point for a single time. For example, in a case that the finger touches the touch panel for one second, the action duration is one second.

Further, after it is determined that the current operation is a slide operation, in a case that a plurality of slide operations is received, the number of the received slide operations is determined. In a case that the number of the slide operations is greater than the first threshold, the holographic projection device may determine by calculation that the user performs a plurality of slide operations on the touch panel. In this case, the holographic projection device may determine that the user is performing a caress operation. In a case that the current operation is not a slide operation, and the action duration of the current operation is less than the fourth threshold, the holographic projection device may determine by calculation that the user performs a single short-time touch operation on the touch panel. In this case, the holographic projection device may determine that the user is performing a pat action.

According to this embodiment, the touch information is compared with the first threshold, second threshold, third threshold, and fourth threshold, so as to determine whether the current touch operation indicates a caress operation or a pat operation, thereby improving the accuracy of determining the current touch operation, and improving the flexibility of controlling the holographic projection device.

In an implementation, determining, by the holographic projection device, that the touch operation indicates a caress operation on the holographic projection-based virtual character includes the following steps 1 to 3.

In step 1, the holographic projection device obtains a first position at which the touch point stays on the touch panel at a first moment and a second position at which the touch point stays on the touch panel at a second moment, a time interval from the first moment to the second moment being a frame period.

In step 2, the holographic projection device recognizes, in a case that it is determined that a distance between the first position and the second position is greater than the second threshold, an action in which the touch point moves from the first position to the second position as a slide action, and adds one to the number of slide actions.

In step 3, the holographic projection device determines that the touch operation indicates a caress operation on the holographic projection-based virtual character in a case that it is determined that the number of slide actions is greater than the first threshold.

A case that the palm touches the touch screen is described with reference to FIG. 5. A touch panel is in a to-be-detected state (that is, S502). In this case, the palm touches the touch panel. It is determined in S504 whether the number of touch points is greater than 3, and in a case that the number of touch points is greater than 3, the coordinates of the touch points are recorded in S506. In this case, the coordinates of one of the touch points may be chosen and recorded, or the coordinates of all the touch points may be recorded. When the touch points disappear, it is determined in S508 whether the number of the touch points is greater than 3 before the touch points disappear, and in a case that the number of the touch points is greater than 3, coordinates where the touch points disappear are recorded in S510. In this case, a touch point whose start coordinates are recorded may be chosen and the disappearance coordinates of the touch point are recorded, or disappearance coordinates of all the touch points may be recorded. Start coordinates and disappearance coordinates of each touch point correspond to each other. A distance D between the start coordinates and the disappearance coordinates of a touch point is calculated in S512, and it is determined in S514 whether D is greater than the second threshold. In a case that D is greater than the second threshold, the number E of slide actions is incremented by one in S516. It is determined in S518 whether E is greater than the first threshold, and in a case that E is greater than the first threshold, it is determined that a currently performed action is a caress operation. In this process, in a case that the numbers of the touch points in S504 and S508 are not greater than 3 or after it is determined that the current action is a caress operation, S522 is performed, where E is reset to 0. It should be noted that the number 3 as referred to in determining whether the number of the touch points is greater than 3 may be set flexibly. In addition, the foregoing process is a process of determining whether the palm is performing a caress operation. In a case of determining whether the finger (or another part) is performing a caress operation, steps S504 and S508 in the process in FIG. 5 may be deleted, which is however not limited thereto, so that it is not necessary to determine whether the number of the touch points is greater than 3. In this case, it can be determined whether a current operation is a caress operation by the remaining steps in FIG. 5.

According to this embodiment, it is determined whether the current operation is a caress operation by using the foregoing method, thereby improving the accuracy of determining the current touch operation, and improving the flexibility of controlling the holographic projection device.

In an implementation, determining, by the holographic projection device, that the touch operation indicates a pat operation on the holographic projection-based virtual character includes the following steps 1 and 2.

In step 1, the holographic projection device obtains a third position at which the touch point stays on the touch panel at a third moment and a fourth position at which the touch point stays on the touch panel at a fourth moment.

In step 2, the holographic projection device determines, in a case that it is determined that a distance between the third position and the fourth position is less than the third threshold and a time interval from the third moment to the fourth moment is less than the fourth threshold, that the touch operation indicates a pat operation on the holographic projection-based virtual character.

For example, the description is provided below with reference to FIG. 6. For example, the touch operation is an operation performed on the touch panel by the palm. The touch panel is in a to-be-detected state (S602). After the palm touches the touch panel, it is determined in S604 whether the number of touch points is greater than 3, and in a case that the number of touch points is greater than 3, coordinates and a generation moment of one touch point or coordinates and generation moments of all the touch points are recorded in S606. It is determined in S608 whether the number of the touch points is equal to 0, and in a case that the number of the touch points is equal to 0, disappearance coordinates and a disappearance moment of the one touch point or disappearance coordinates and disappearance moments of all the touch points are recorded. A distance L between the coordinates of the touch point and a time interval T from the generation moment to the disappearance moment of the touch point are calculated in S610. It is determined in S612 whether L is less than the third threshold, and it is determined in S614 whether T is less than the fourth threshold. In a case that L is less than the third threshold and T is less than the fourth threshold, it is determined in S616 that the current operation is a pat operation. In a case that L is greater than or equal to the third threshold, or T is greater than or equal to the fourth threshold, or it is determined that the current action is a pat operation, the touch panel enters the to-be-detected state in S602 again. In addition, in a case that the touch point does not disappear in a detection process, the position of the touch point and a current moment are periodically recorded.

According to this embodiment, it is determined whether the current operation is a pat operation by using the foregoing method, thereby improving the accuracy of determining the current touch operation, and improving the flexibility of controlling the holographic projection device.

According to the invention, obtaining, by the holographic projection device, a fourth position at which the touch point stays on the touch panel at a fourth moment includes the following steps 1 to 5.

In step 1, the holographic projection device performs the following steps in each frame period after the third position at which the touch point stays on the touch panel is obtained, until it is detected that the touch operation is ended:

In step 2, the holographic projection device obtains a current position at which the touch point stays on the touch panel at a target moment in a current frame period, a time interval from the third moment to the target moment being N frame periods, N ≥ 1, N being an integer.

In step 3, the holographic projection device obtains, in a case that it is detected that the touch operation is not ended, a target position at which the touch point stays on the touch panel at a target moment in a next frame period of the current frame period, determines the target moment in the next frame period as the target moment in the current frame period, and determines the target position at which the touch point stays in the next frame period as the current position.

In step 4, the holographic projection device determines, in a case that it is detected that the touch operation is ended, the target moment in the current frame period as the fourth moment, and determines the current position as the fourth position.

In step 5, it is determined that the touch operation is ended in a case that an action region of the touch point on the touch panel is less than a fifth threshold.

For example, description is made with continued reference to an example in which the finger touches the touch panel. When the finger touches the touch panel, a current position of the touch point and a current time are obtained. In a case that the touch operation is not ended, a touch position and a touch time of the touch point in the next frame period are obtained until the touch operation is ended, and a touch position and a touch time at a moment before the touch operation is ended are obtained. The touch position at the moment before the touch operation is ended is determined as the fourth position, and the touch time at the moment before the touch operation is ended is determined as the fourth moment. Since an area of the touch point between the finger and the touch panel increases as finger pressure increases, it indicates that the touch operation is ended and the finger leaves the touch panel in a case that the area of the touch point is reduced to an empirical value.

According to the invention, the fourth moment and the fourth position are determined by using the foregoing method, thereby improving the accuracy of the fourth moment and the fourth position. The flexibility of controlling the holographic projection device is further improved.

In an implementation, after the recognizing the touch operation according to the touch information, the method further includes the following steps 1 and 2.

In step 1, the holographic projection device obtains an action region of interaction between the touch point and the touch panel.

In step 2, the holographic projection device determines, according to a position of the action region on the touch panel, interactive information requested by the interaction request.

For example, as shown in FIG. 7, the touch panel is divided into six regions, A, B, C, D, E, and F, and interactions in different regions correspond to different interactive information.

After the touch panel is divided into different regions, the sizes and shapes of the regions may be the same or different, and the number of the divided regions may be any positive number greater than or equal to 1.

According to this embodiment, the interactive information is determined according to the position of the action region of the interaction between the touch point and the touch panel on the touch panel, thereby improving the flexibility of controlling the holographic projection device.

In an implementation, the determining, by the holographic projection device according to a position of the action region on the touch panel, interactive information requested by the interaction request includes either or both of the following two steps (1) and (2).

In step (1), the holographic projection device determines, according to the position of the action region on the touch panel, a character part of the holographic projection-based virtual character for the interaction, and determines, according to the character part, the interactive information requested by the interaction request.

In step (2), the holographic projection device determines, according to the position of the action region on the touch panel, an interaction type of the interaction with the holographic projection-based virtual character, and determines, according to the interaction type, the interactive information requested by the interaction request.

The interaction type may include, but is not limited to, an interaction form or an interaction mode. The interaction form may include, but is not limited to, an action performed by the character or a sound played by the character, and the interaction mode may include, but is not limited to, a current mode of the character.

The mode may include, but is not limited to, a plurality of modes of imitative human emotions, for example, a shy mode, an upset mode, a scared mode, and a cute mode.

For example, as shown in FIG. 8, the touch panel is divided into six regions, and the regions respectively correspond to the head, the left arm, the right arm, the belly, the left leg, and the right leg. Touching different regions indicates interacting with different body parts of the character, for example, patting the head or caressing the belly. Alternatively, reference is made to FIG. 9 and FIG. 10. In FIG. 9, different positions of the touch panel are set for different interaction forms (for example, dancing or singing). Moreover, in FIG. 10, different positions of the touch panel are set for different modes of imitative human emotions (for example, a shy mode and a cute mode).

According to this embodiment, by means of differences between positions of action regions on the touch panel, a character part of the holographic projection-based virtual character for the interaction or an interaction type of the interaction is determined, thereby improving the flexibility of controlling the holographic projection device.

In an implementation, the controlling, by the holographic projection device, the holographic projection-based virtual character to perform an interactive action matching the interaction request includes at least one of the following steps (1) and (2).

In step (1), the holographic projection device controls the holographic projection-based virtual character to play an animation matching the interaction request.

In step (2), the holographic projection device controls the holographic projection-based virtual character to play an audio matching the interaction request.

The controlling the holographic projection-based virtual character to play an audio may include, but is not limited to, controlling a mouth of the holographic projection-based virtual character to change and simultaneously playing the audio by using a sound playing apparatus.

For example, after the holographic projection-based virtual character is projected, the holographic projection-based virtual character may be controlled to dance and perform an action, or the mouth of the holographic projection-based virtual character may be controlled to change and an audio is simultaneously played, to simulate that the holographic projection-based virtual character is making a sound.

According to this embodiment, the holographic projection-based virtual character is controlled to play an animation or play an audio, thereby improving the flexibility of the holographic projection-based virtual character.

In an implementation, the interactive control method further includes:
adjusting, by the holographic projection device, an affection parameter of the holographic projection-based virtual character; and in a case that it is determined that the affection parameter reaches a target value, controlling, by the holographic projection device, a character response mode of the holographic projection-based virtual character, and/or, enabling, by the holographic projection device, a hidden skill of the holographic projection-based virtual character in a virtual scene.

The affection parameter may be indicated by using a number or in a form such as the number of red hearts or an energy value. The hidden skill may include, but is not limited to, a new animation, a new sound or a new phase. For example, the hidden skill is a new animation. After the affection parameter reaches a particular value, the character may be allowed to play the new animation. In a case that the affection parameter does not reach the particular value, the character is not allowed to play the new animation.

For example, the number of red hearts is used for indicating the affection parameter. After interaction with the holographic projection-based virtual character, the number of red hearts reaches a particular value. In this case, the holographic projection-based virtual character may make a new change. For example, the holographic projection-based virtual character may dance, sing, change clothes or the like.

According to this embodiment, it is determined according to the affection parameter, whether to enable the hidden skill of the holographic projection-based virtual character, thereby improving the flexibility of controlling the holographic projection device.

It should be noted that for ease of description, the foregoing method embodiments are described as a combination of a series of actions. However, a person skilled in the art shall appreciate that this application is not limited to the described sequence of the actions because according to this application, some steps may be performed in another sequence or may be simultaneously performed. In addition, it is to be understood by a person skilled in the art that the embodiments described in this specification are all preferred embodiments, and the actions and modules in the embodiments are not all necessary for this application.

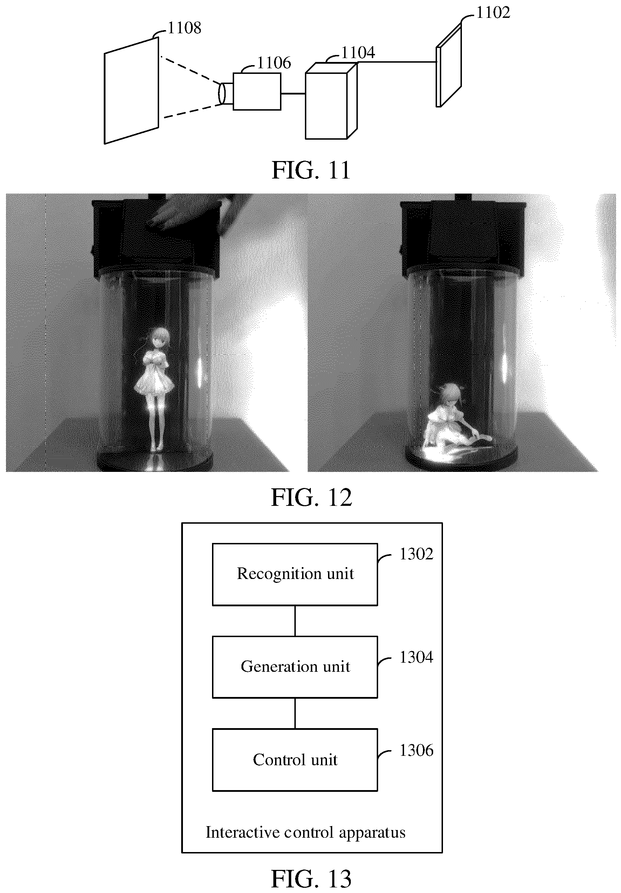

According to another aspect of the embodiments of this application, a holographic projection device for implementing the foregoing interactive control method is further provided. In an implementation, as shown in FIG. 11, the holographic projection device includes:
a touch panel 1102, configured to acquire touch information generated by a touch operation;
a processor 1104, connected to the touch panel and the projection light engine, and configured to recognize the touch operation according to the touch information, generate an interaction request according to the recognized touch operation, the interaction request being used for requesting interaction with a holographic projection-based virtual character, and transmit the interaction request to the projection light engine; and
a projection light engine 1106, configured to control the holographic projection-based virtual character to be projected onto the holographic projection film; and
a holographic projection film 1108, configured to display the holographic projection-based virtual character,
the projection light engine 1104 being further configured to control, according to the interaction request, the holographic projection-based virtual character to perform an interactive action matching the interaction request.

There may be one or a plurality of touch panels, but this application is not limited thereto. In a case that there are a plurality of touch panels, the touch panels may respectively correspond to different positions of the holographic projection-based virtual character, but this application is not limited thereto.

The processor may include, but is not limited to, a receiving module, configured to receive the touch information acquired by the touch panel 1102; a calculation module, configured to obtain the interactive action corresponding to the touch information by performing computation according to the received touch information; a storage module, configured to store the interactive action that may be performed by the holographic projection-based virtual character; and a transmitter, configured to transmit animation information corresponding to the interactive action performed by the holographic projection virtual character according to the touch information to the projection light engine. After obtaining the animation information, the projection light engine projects the animation information onto the holographic projection film, to display the animation information of the holographic projection-based virtual character.

The holographic projection device may be applied to, but is not limited to, a process of interacting with the holographic projection-based virtual character in the holographic projection device. For example, the holographic projection device may be applied to a process of interacting with a projected holographic virtual cartoon figure, or be applied to a process of interacting with a projected holographic virtual building.

An example in which the holographic projection device is applied to the process of interacting with a projected holographic virtual cartoon figure is used below for description of the holographic projection device. FIG. 12 shows two physical pictures of a holographic projection device. In FIG. 12, a region of a touch panel of the holographic projection device on the left may be touched by a hand, so as to generate touch information. After obtaining the touch information, the holographic projection device makes a determination based on the touch information. For example, transient light-touch information is obtained, and a storage position is searched based on such information for an action of a cartoon figure corresponding to the touch information, or a determination is performed based on the obtained transient light-touch information, so as to determine the action of the cartoon figure corresponding to the transient light-touch information, thereby projecting the action corresponding to the transient light-touch information onto the holographic projection film. For example, with reference to the cartoon figure in the holographic projection device on the right in FIG. 12, the holographic projection device projects an animation of the cartoon figure being knocked down when receiving the transient light-touch information, thereby achieving interaction between a user and the cartoon figure.

For other implementations of this embodiment, reference may be made to the implementation described in the foregoing interactive control method, and details are not described herein. It should be noted that reference can be made to the method embodiments for the technical details of the holographic projection device.

According to another aspect of the embodiments of this application, an interactive control apparatus for implementing the foregoing interactive control method is further provided. One or more of the units, the modules and submodules mentioned below can be implemented by processing circuitry. As shown in FIG. 13, the apparatus is applied to a holographic projection device and includes:
(1) a recognition unit 1302, configured to recognize a touch operation performed on a touch panel, the holographic projection device being configured to display a holographic projection-based virtual character, the touch panel being disposed on the holographic projection device;
(2) a generation unit 1304, configured to generate an interaction request according to the recognized touch operation, the interaction request being used for requesting interaction with the holographic projection-based virtual character; and
(3) a control unit 1306, configured to control the holographic projection-based virtual character to perform an interactive action matching the interaction request.

In an implementation, to improve the flexibility of controlling the holographic projection device, the recognition unit may include:
(1) a first obtaining module, configured to obtain touch information generated by interaction between a touch point corresponding to the touch operation and the touch panel; and
(2) a recognition module, configured to recognize the touch operation according to the touch information.

In an implementation, to improve the flexibility of controlling the holographic projection device, the recognition module may include:
(1) a first determination submodule, configured to determine, in a case that it is determined according to the touch information that the number of slide actions performed on the touch panel by the touch point is greater than a first threshold, that the touch operation indicates a caress operation on the holographic projection-based virtual character, the slide action being an action in which a movement distance of the touch point on the touch panel is greater than a second threshold; and
(2) a second determination submodule, configured to determine, in a case that it is determined according to the touch information that the movement distance of the touch point on the touch panel is less than a third threshold and action duration of the touch point on the touch panel is less than a fourth threshold, that the touch operation indicates a pat operation on the holographic projection-based virtual character.

In an implementation, to improve the flexibility of controlling the holographic projection device, the first determination submodule may further be configured to perform the following steps:
obtaining a first position at which the touch point stays on the touch panel at a first moment and a second position at which the touch point stays on the touch panel at a second moment, a time interval from the first moment to the second moment being a frame period;
recognizing, in a case that it is determined that a distance between the first position and the second position is greater than the second threshold, an action in which the touch point moves from the first position to the second position as the slide action, and adding one to the number of slide actions; and
determining that the touch operation indicates a caress operation on the holographic projection-based virtual character in a case that it is determined that the number of slide actions is greater than the first threshold.

In an implementation, to improve the flexibility of controlling the holographic projection device, the second determination submodule may further be configured to perform the following steps:
obtaining a third position at which the touch point stays on the touch panel at a third moment and a fourth position at which the touch point stays on the touch panel at a fourth moment; and
determining, in a case that it is determined that a distance between the third position and the fourth position is less than the third threshold and a time interval from the third moment to the fourth moment is less than the fourth threshold, that the touch operation indicates a pat operation on the holographic projection-based virtual character.

In an implementation, to improve the flexibility of controlling the holographic projection device, the second determination submodule may further be configured to perform the following step:
performing the following steps in each frame period after the third position at which the touch point stays on the touch panel is obtained, until it is detected that the touch operation is ended:
obtaining a current position at which the touch point stays on the touch panel at a target moment in a current frame period, a time interval from the third moment to the target moment being N frame periods, N ≥ 1, N being an integer;
obtaining, in a case that it is detected that the touch operation is not ended, a target position at which the touch point stays on the touch panel at a target moment in a next frame period of the current frame period, determining the target moment in the next frame period as the target moment in the current frame period, and determining the target position at which the touch point stays in the next frame period as the current position; and
determining, in a case that it is detected that the touch operation is ended, the target moment in the current frame period as the fourth moment, and determining the current position as the fourth position,
where it is determined that the touch operation is ended in a case that an action region of the touch point on the touch panel is less than a fifth threshold.

In an implementation, to improve the flexibility of controlling the holographic projection device, the recognition unit further includes:
(1) a second obtaining module, configured to obtain the action region of interaction between the touch point and the touch panel after recognizing the touch operation according to the touch information; and
(2) a determination module, configured to determine, according to a position of the action region on the touch panel, interactive information requested by the interaction request.

In an implementation, to improve the flexibility of controlling the holographic projection device, the determination module includes at least one of the following:
a third determination submodule, configured to determine, according to the position of the action region on the touch panel, a character part of the holographic projection-based virtual character for the interaction, and determine, according to the character part, the interactive information requested by the interaction request; and
a fourth determination submodule, configured to determine, according to the position of the action region on the touch panel, an interaction type of the interaction with the holographic projection-based virtual character, and determine, according to the interaction type, the interactive information requested by the interaction request.

In an implementation, to improve the flexibility of controlling the holographic projection device, the control unit includes at least one of the following:
a first control module, configured to control the holographic projection-based virtual character to play an animation matching the interaction request; and
a second control module, configured to control the holographic projection-based virtual character to play an audio matching the interaction request.

In an implementation, to improve the flexibility of controlling the holographic projection device, the foregoing apparatus further includes:
(1) an adjustment unit, configured to adjust an affection parameter of the holographic projection-based virtual character, where in a case that it is determined that the affection parameter reaches a target value, the holographic projection device controls a character response mode of the holographic projection-based virtual character, and/or, the holographic projection device enables a hidden skill of the holographic projection-based virtual character in a virtual scene.

It should be noted that reference can be made to the method embodiments for the technical details of the interactive control apparatus.

According to still another aspect of the embodiments of this application, a storage medium, such as a non-transitory computer-readable storage medium, is further provided. The storage medium stores a computer program, the computer program being configured to perform, when being run, the steps in any one of the foregoing method embodiments.

In this embodiment, the storage medium may be configured to store a computer program for performing the following steps:
S1, recognizing a touch operation performed on a touch panel, a holographic projection device being configured to display a holographic projection-based virtual character, the touch panel being disposed on the holographic projection device;
S2, generating an interaction request according to the recognized touch operation, the interaction request being used for requesting interaction with the holographic projection-based virtual character; and
S3, controlling the holographic projection-based virtual character to perform an interactive action matching the interaction request.

In this embodiment, a person of ordinary skill in the art may understand that all or some of the steps of the methods in the foregoing embodiments may be implemented by a program instructing hardware relevant to a terminal device. The program may be stored in a computer-readable storage medium, and the storage medium may include: a flash drive, a read-only memory (ROM), a random access memory (RAM), a magnetic disk, an optical disc, and the like.

In addition, an embodiment of this application further provides an electronic device, including a memory and a processor, the memory storing a computer program, the processor being configured to perform the foregoing interactive control method by using the computer program.

An embodiment of this application further provides a computer program product including instructions, the computer program product, when being run on a server, causing the server to perform the foregoing interactive control method provided in the foregoing embodiments.

The serial numbers of the embodiments of this application are merely for description purpose but do not indicate a rank of preference of the embodiments.

When the integrated unit in the foregoing embodiments is implemented in a form of a software functional unit and sold or used as an independent product, the integrated unit may be stored in the foregoing computer-readable storage medium. Based on such understanding, the essence or the part contributing to the related art of the technical solutions of this application, or all or some of the technical solutions may be implemented in a form of a software product. The computer software product is stored in a storage medium and includes several instructions for instructing one or more computer devices (which may be a personal computer, a server, a network device, or the like) to perform all or some of steps of the methods in the embodiments of this application.

The embodiments in the specification are all described in a progressive manner, and each embodiment focuses on a difference from other embodiments. For same or similar parts in the embodiments, cross-reference may be made to these embodiments. The apparatus disclosed in the embodiments is corresponding to the method disclosed in the embodiments and therefore is only briefly described, and reference may be made to the descriptions of the method for the relevant part.

A person skilled in the art may further realize that the units and algorithm steps of the examples described with reference to the embodiments disclosed in this specification can be implemented by electronic hardware, computer software, or a combination thereof. To clearly describe the interchangeability of the hardware and software, the parts and steps of each example are described generally according to the functions in the foregoing description. Whether these functions are executed in the manner of hardware or software depends on specific applications and design constraints of the technical solutions. A person skilled in the art may use different methods to implement the described functions for each particular application, and such implementation shall not be considered as going beyond the scope of this application.

The steps of the methods or algorithms described in conjunction with the embodiments according to the present disclosure may be directly implemented using hardware, a software module executed by a processor, or the combination thereof. The software module may be placed in a RAM, an internal memory, a ROM, an electrically programmable ROM (EPROM), an electrically erasable programmable ROM (EEPROM), a register, a hard disk, a removable magnetic disk, a CD-ROM, or any storage medium of other forms well-known in the technical field.

The foregoing description of the disclosed embodiments enables a person skilled in the art to implement or use the invention. The application is not limited to these embodiments according to the present disclosure, but shall accord with the broadest scope consistent with the principles and novel features disclosed in the present disclosure.

## Claims

1. An interactive control method, comprising:
recognizing (S202), by a holographic projection device, a touch operation performed on a touch panel (104), the holographic projection device being configured to display a holographic projection-based virtual character, the touch panel (104) being disposed on the holographic projection device;
generating (S204), by the holographic projection device, an interaction request according to the recognized touch operation, the interaction request being used for requesting interaction with the holographic projection-based virtual character; and
controlling (S206), by the holographic projection device, the holographic projection-based virtual character to perform an interactive action matching the interaction request,
wherein the recognizing (S202), by the holographic projection device, the touch operation performed on the touch panel (104) comprises:
obtaining, by the holographic projection device, touch information generated by interaction between a touch point corresponding to the touch operation and the touch panel (104); and
recognizing, by the holographic projection device, the touch operation according to the touch information,
wherein the recognizing, by the holographic projection device, the touch operation according to the touch information comprises:
determining, by the holographic projection device in a case that it is determined according to the touch information that the number of slide actions performed on the touch panel (104) by the touch point is greater than a first threshold, that the touch operation indicates a caress operation on the holographic projection-based virtual character, the slide action being an action in which a movement distance of the touch point on the touch panel (104) during a time interval is greater than a second threshold; the time interval being a frame period; and
determining, by the holographic projection device in a case that it is determined according to the touch information that the movement distance of the touch point on the touch panel (104) is less than a third threshold and action duration of the touch point on the touch panel (104) is less than a fourth threshold, that the touch operation indicates a pat operation on the holographic projection-based virtual character;
wherein the determining, by the holographic projection device, that the touch operation indicates a pat operation on the holographic projection-based virtual character comprises:
when the touch panel is in a to-be-detected state, obtaining, by the holographic projection device, a third position at which the touch point stays on the touch panel (104) at a third moment and a fourth position at which the touch point stays on the touch panel (104) at a fourth moment; and
determining, by the holographic projection device in a case that it is determined that a distance between the third position and the fourth position is less than the third threshold and a time interval from the third moment to the fourth moment is less than the fourth threshold, that the touch operation indicates a pat operation on the holographic projection-based virtual character;
wherein, if the distance between the third position and the fourth position is greater than or equal to the third threshold, or the time interval from the third moment to the fourth moment is greater than or equal to the fourth threshold, or the touch operation is determined as a pat operation, the touch panel re-enters the to-be-detected state;
wherein the obtaining, by the holographic projection device, the fourth position at which the touch point stays on the touch panel (104) at the fourth moment comprises:
performing, by the holographic projection device, the following steps in each frame period after the holographic projection device obtains the third position at which the touch point stays on the touch panel (104), until it is detected that the touch operation is ended:
obtaining, by the holographic projection device, a current position at which the touch point stays on the touch panel (104) at a target moment in a current frame period, a time interval from the third moment to the target moment being N frame periods, N ≥ 1, N being an integer;
obtaining, by the holographic projection device in a case that it is detected that the touch operation is not ended, a target position at which the touch point stays on the touch panel (104) at a target moment in a next frame period of the current frame period, determining the target moment in the next frame period as the target moment in the current frame period, and determining the target position at which the touch point stays in the next frame period as the current position; and
determining, by the holographic projection device in a case that it is detected that the touch operation is ended, the target moment in the current frame period as the fourth moment, and determining the current position as the fourth position,
wherein it is determined that the touch operation is ended in a case that an area of an action region of the touch point on the touch panel (104) is less than a fifth threshold.

2. The method according to claim 1, wherein after the recognizing (S202), by the holographic projection device, the touch operation according to the touch information, the method further comprises:
obtaining, by the holographic projection device, an action region of the interaction between the touch point and the touch panel (104); and
determining, by the holographic projection device according to a position of the action region on the touch panel (104), interactive information requested by the interaction request.

3. The method according to claim 2, wherein the determining, by the holographic projection device according to a position of the action region on the touch panel (104), interactive information requested by the interaction request comprises:
determining, by the holographic projection device according to the position of the action region on the touch panel (104), a character part of the holographic projection-based virtual character for the interaction, and determining, according to the character part, the interactive information requested by the interaction request;
and/or,
determining, by the holographic projection device according to the position of the action region on the touch panel (104), an interaction type of the interaction with the holographic projection-based virtual character, and determining, according to the interaction type, the interactive information requested by the interaction request.

4. The method according to any one of claims 1 to 3, wherein the controlling (S206), by the holographic projection device, the holographic projection-based virtual character to perform an interactive action matching the interaction request comprises:
controlling, by the holographic projection device, the holographic projection-based virtual character to play an animation matching the interaction request; and/or,
controlling, by the holographic projection device, the holographic projection-based virtual character to play an audio matching the interaction request.

5. The method according to any one of claims 1 to 3, further comprising:
adjusting, by the holographic projection device, an affection parameter of the holographic projection-based virtual character; and
controlling, by the holographic projection device, a character response mode of the holographic projection-based virtual character, and/or, enabling, by the holographic projection device, a hidden skill of the holographic projection-based virtual character in a virtual scene, in a case that it is determined that the affection parameter reaches a target value.

6. A storage medium with a computer program stored thereon, the computer program, when being run, performing the interactive control method according to any one of claims 1 to 5.

7. An electronic device, comprising a memory and a processor, the memory storing a computer program, the processor being configured to perform the interactive control method according to any one of claims 1 to 5 by using the computer program.

## Patentansprüche

1. Interaktives Steuerverfahren, das Folgendes umfasst:
Erkennen (S202) eines Berührungsvorgangs, der an einem Touchpanel (104) durchgeführt wird, durch eine holographische Projektionsvorrichtung, wobei die holographische Projektionsvorrichtung dazu ausgelegt ist, einen auf einer holographischen Projektion basierenden virtuellen Charakter anzuzeigen, wobei das Touchpanel (104) auf der holographischen Projektionsvorrichtung angeordnet ist;
Erzeugen (S204) einer Interaktionsanforderung gemäß dem erkannten Berührungsvorgang durch die holographische Projektionsvorrichtung, wobei die Interaktionsanforderung zum Anfordern einer Interaktion mit dem auf der holographischen Projektion basierenden virtuellen Charakter verwendet wird; und
Steuern (S206) des auf der holographischen Projektion basierenden virtuellen Charakters durch die holographische Projektionsvorrichtung, die interaktive Aktion, die mit der Interaktionsanforderung übereinstimmt, durchzuführen,
wobei das Erkennen (S202) des Berührungsvorgangs, der auf dem Touchpanel (104) durchgeführt wird, durch die holographische Projektionsvorrichtung Folgendes umfasst:
Erhalten von Berührungsinformationen, die durch eine Interaktion zwischen einem Berührungspunkt, der dem Berührungsvorgang entspricht, und dem Touchpanel (104) erzeugt werden, durch die holographische Projektionsvorrichtung und
Erkennen des Berührungsvorgangs, der den Berührungsinformationen entspricht, durch die holographische Projektionsvorrichtung,
wobei das Erkennen des Berührungsvorgangs, der den Berührungsinformationen entspricht, durch die holographische Projektionsvorrichtung Folgendes umfasst:
in einem Fall, in dem gemäß den Berührungsinformationen bestimmt wird, dass die Anzahl von Gleitaktionen, die auf dem Touchpanel (104) durch den Berührungspunkt durchgeführt werden, größer ist als ein erster Schwellwert, Bestimmen durch die holographische Projektionsvorrichtung, dass der Berührungsvorgang einen Streichelvorgang am auf der holographischen Projektion basierenden virtuellen Charakter anzeigt, wobei die Gleitaktion eine Aktion ist, bei der ein Bewegungsabstand des Berührungspunkts auf dem Touchpanel (104) während eines Zeitintervalls größer ist als ein zweiter Schwellwert; wobei das Zeitintervall eine Frameperiode ist; und
in einem Fall, in dem gemäß den Berührungsinformationen bestimmt wird, dass der Bewegungsabstand des Berührungspunkts auf dem Touchpanel (104) kleiner ist als ein dritter Schwellwert und eine Aktionsdauer des Berührungspunkts auf dem Touchpanel (104) kürzer ist als ein vierter Schwellwert, Bestimmen durch die holographische Projektionsvorrichtung, dass der Berührungsvorgang einen Tippvorgang am auf der holographischen Projektion basierenden virtuellen Charakter anzeigt;
wobei das Bestimmen durch die holographische Projektionsvorrichtung, dass der Berührungsvorgang einen Tippvorgang am auf der holographischen Projektion basierenden virtuellen Charakter anzeigt, Folgendes umfasst:
wenn sich das Touchpanel in einem zu detektierenden Zustand befindet, Erhalten einer dritten Position, in der der Berührungspunkt in einen dritten Augenblick auf dem Touchpanel (104) verbleibt, und einer vierten Position, in der der Berührungspunkt in einem vierten Augenblick auf dem Touchpanel (104) verbleibt, durch die holographische Projektionsvorrichtung und
in einem Fall, in dem bestimmt wird, dass ein Abstand zwischen der dritten Position und der vierten Position kleiner ist als der dritte Schwellwert und ein Zeitintervall vom dritten Augenblick zum vierten Augenblick kürzer ist als der vierte Schwellwert, Bestimmen durch die holographische Projektionsvorrichtung, dass der Berührungsvorgang einen Klapsvorgang am auf der holographischen Projektion basierenden virtuellen Charakter anzeigt;
wobei, wenn der Abstand zwischen der dritten Position und der vierten Position größer als oder gleich dem dritten Schwellwert ist oder das Zeitintervall vom dritten Augenblick zum vierten Augenblick größer als oder gleich dem vierten Schwellwert ist oder bestimmt wird, dass der Berührungsvorgang ein Klapsvorgang ist, das Touchpanel wieder in den zu detektierenden Zustand eintritt;
wobei das Erhalten der vierten Position, in der der Berührungspunkt im vierten Augenblick auf dem Touchpanel (104) verbleibt, durch die holographische Projektionsvorrichtung Folgendes umfasst:
Durchführen der folgenden Schritte in jeder Frameperiode, nachdem die holographische Projektionsvorrichtung die dritte Position, in der der Berührungspunkt auf dem Touchpanel (104) verbleibt, durch die holographische Projektionsvorrichtung, bis detektiert wird, dass der Berührungsvorgang beendet ist:
Erhalten einer aktuellen Position, in der der Berührungspunkt in einem Zielaugenblick in einer aktuellen Frameperiode auf dem Touchpanel (104) verbleibt, durch die holographische Projektionsvorrichtung, wobei ein Zeitintervall vom dritten Augenblick zum Zielaugenblick N Frameperioden ist, N ≥ 1, wobei N eine Ganzzahl ist;
in einem Fall, in dem detektiert wird, dass der Berührungsvorgang nicht beendet ist, Erhalten einer Zielposition, in der der Berührungspunkt in einem Zielaugenblick einer nächsten Frameperiode der aktuellen Frameperiode auf dem Touchpanel (104) verbleibt, Bestimmen des Zielaugenblicks in der nächsten Frameperiode als den Zielaugenblick in der aktuellen Frameperiode und Bestimmen der Zielposition, in der der Berührungspunkt in der nächsten Frameperiode verbleibt, als die aktuelle Position, durch die holographische Projektionsvorrichtung und
in einem Fall, in dem detektiert wird, dass der Berührungsvorgang beendet ist, Bestimmen des Zielaugenblicks in der aktuellen Frameperiode als den vierten Augenblick und Bestimmen der aktuellen Position als die vierte Position durch die holographische Projektionsvorrichtung,
wobei in einem Fall, in dem ein Bereich einer Aktionsregion des Berührungspunkts auf dem Touchpanel (104) kleiner ist als ein fünfter Schwellwert, bestimmt wird, dass der Berührungsvorgang beendet ist.

2. Verfahren nach Anspruch 1, wobei das Verfahren nach dem Erkennen (S202) des Berührungsvorgangs gemäß den Berührungsinformationen durch die holographische Projektionsvorrichtung ferner Folgendes umfasst:
Erhalten einer Aktionsregion der Interaktion zwischen dem Berührungspunkt und dem Touchpanel (104) durch die holographische Projektionsvorrichtung und
Bestimmen von interaktiven Informationen, die durch die Interaktionsanforderung angefordert werden, durch die holographische Projektionsvorrichtung gemäß einer Position der Aktionsregion auf dem Touchpanel (104).

3. Verfahren nach Anspruch 2, wobei das Bestimmen von interaktiven Informationen, die durch die Interaktionsanforderung angefordert werden, durch die holographische Projektionsvorrichtung gemäß einer Position der Aktionsregion auf dem Touchpanel (104) Folgendes umfasst:
Bestimmen eines Charakterteils des auf der holographischen Projektion basierenden virtuellen Charakters für die Interaktion und Bestimmen der interaktiven Informationen, die von der Interaktionsanforderung angefordert werden, gemäß dem Charakterteil durch die holographische Projektionsvorrichtung gemäß der Position der Aktionsregion auf dem Touchpanel (104); und/oder,
Bestimmen einer Interaktionsart der Interaktion mit dem auf der holographischen Projektion basierenden virtuellen Charakter und Bestimmen der interaktiven Informationen, die von der Interaktionsanforderung angefordert werden, gemäß der Interaktionsart durch die holographische Projektionsvorrichtung gemäß der Position der Aktionsregion auf dem Touchpanel (104).

4. Verfahren nach einem der Ansprüche 1 bis 3, wobei das Steuern (S206) des auf der holographischen Projektion basierenden virtuellen Charakters, eine interaktive Aktion durchzuführen, die mit der Interaktionsanforderung übereinstimmt, durch die holographische Projektionsvorrichtung Folgendes umfasst:
Steuern des auf der holographischen Projektion basierenden virtuellen Charakters, eine Animation wiederzugeben, die mit der Interaktionsanforderung übereinstimmt, durch die holographische Projektionsvorrichtung und/oder,
Steuern des auf der holographischen Projektion basierenden virtuellen Charakters, ein Audio wiederzugeben, das mit der Interaktionsanforderung übereinstimmt, durch die holographische Projektionsvorrichtung.

5. Verfahren nach einem der Ansprüche 1 bis 3, das ferner Folgendes umfasst:
Anpassen eines Zuneigungsparameters des auf der holographischen Projektion basierenden virtuellen Charakters durch die holographische Projektionsvorrichtung und
Steuern eines Charakterantwortmodus des auf der holographischen Projektion basierenden virtuellen Charakters und/oder in einem Fall, in dem bestimmt wird, dass der Zuneigungsparameter einen Zielwert erreicht,
Aktivieren einer verborgenen Fähigkeit des auf der holographischen Projektion basierenden virtuellen Charakters in einer virtuellen Szene durch die holographische Projektionsvorrichtung.

6. Speichermedium mit einem darauf gespeicherten Computerprogramm, wobei das Computerprogramm, wenn es läuft, das interaktive Steuerverfahren nach einem der Ansprüche 1 bis 5 durchführt.

7. Elektronische Vorrichtung, die einen Speicher und einen Prozessor umfasst, wobei der Speicher ein Computerprogramm speichert, wobei der Prozessor dazu ausgelegt ist, das interaktive Steuerverfahren nach einem der Ansprüche 1 bis 5 unter Verwendung des Computerprogramms durchzuführen.

## Revendications

1. Procédé de commande interactive, comprenant les étapes suivantes :
reconnaître (S202), par un dispositif de projection holographique, une opération tactile réalisée sur un panneau tactile (104), le dispositif de projection holographique étant configuré pour afficher un personnage virtuel en projection holographique, le panneau tactile (104) étant disposé sur le dispositif de projection holographique ;
générer (S204), par le dispositif de projection holographique, une demande d'interaction selon l'opération tactile reconnue, la demande d'interaction étant utilisée pour demander une interaction avec le personnage virtuel en projection holographique ; et
commander (S206), par le dispositif de projection holographique, le personnage virtuel en projection holographique pour qu'il réalise une action interactive appariée avec la demande d'interaction,
dans lequel la reconnaissance (S202), par le dispositif de projection holographique, de l'opération tactile réalisée sur le panneau tactile (104) comprend les étapes suivantes :
obtenir, par le dispositif de projection holographique, des informations tactiles générées par l'interaction entre un point tactile correspondant à l'opération tactile et le panneau tactile (104) ; et
reconnaître, par le dispositif de projection holographique, l'opération tactile selon les informations tactiles,
dans lequel la reconnaissance, par le dispositif de projection holographique, de l'opération tactile selon les informations tactiles comprend les étapes suivantes :
dans le cas où il est déterminé, selon les informations tactiles, que le nombre d'actions de glissement réalisées sur le panneau tactile (104) par le point tactile est supérieur à un premier seuil, déterminer, par le dispositif de projection holographique, que l'opération tactile indique une opération de caresse sur le personnage virtuel en projection holographique, l'action de glissement étant une action dans laquelle une distance de déplacement du point tactile sur le panneau tactile (104) pendant un intervalle de temps est supérieure à un deuxième seuil ; l'intervalle de temps étant une période de trame ; et
dans le cas où il est déterminé, selon les informations tactiles, que la distance de déplacement du point tactile sur le panneau tactile (104) est inférieure à un troisième seuil et qu'une durée d'action du point tactile sur le panneau tactile (104) est inférieure à un quatrième seuil, déterminer, par le dispositif de projection holographique, que l'opération tactile indique une opération de tapotement sur le personnage virtuel en projection holographique ;
dans lequel le fait de déterminer, par le dispositif de projection holographique, que l'opération tactile indique une opération de tapotement sur le personnage virtuel en projection holographique comprend les étapes suivantes :
lorsque le panneau tactile est dans un état à détecter, obtenir, par le dispositif de projection holographique, une troisième position dans laquelle le point tactile reste sur le panneau tactile (104) à un troisième moment et une quatrième position dans laquelle le point tactile reste sur le panneau tactile (104) à un quatrième moment ; et
dans le cas où il est déterminé qu'une distance entre la troisième position et la quatrième position est inférieure au troisième seuil et qu'un intervalle de temps du troisième moment au quatrième moment est inférieur au quatrième seuil, déterminer, par le dispositif de projection holographique, que l'opération tactile indique une opération de tapotement sur le personnage virtuel en projection holographique ;
dans lequel, si la distance entre la troisième position et la quatrième position est supérieure ou égale au troisième seuil, si l'intervalle de temps du troisième moment au quatrième moment est supérieur ou égal au quatrième seuil, ou si l'opération tactile est déterminée comme une opération de tapotement, le panneau tactile réintègre l'état à détecter ;
dans lequel l'obtention, par le dispositif de projection holographique, de la quatrième position dans laquelle le point tactile reste sur le panneau tactile (104) au quatrième moment comprend :
la réalisation, par le dispositif de projection holographique, des étapes suivantes dans chaque période de trame après que le dispositif de projection holographique a obtenu la troisième position dans laquelle le point tactile reste sur le panneau tactile (104), jusqu'à ce que la fin de l'opération tactile soit détectée :
obtenir, par le dispositif de projection holographique, une position actuelle dans laquelle le point tactile reste sur le panneau tactile (104) à un moment cible dans une période de trame actuelle, un intervalle de temps du troisième moment au moment cible étant de N périodes de trames, N ≥ 1, N étant un nombre entier ;
dans le cas où il est détecté que l'opération tactile n'est pas terminée, obtenir par le dispositif de projection holographique une position cible dans laquelle le point tactile reste sur le panneau tactile (104) à un moment cible dans une période de trame suivante de la période de trame actuelle, déterminer le moment cible dans la période de trame suivante comme moment cible dans la période de trame actuelle, et déterminer la position cible dans laquelle le point tactile reste dans la période de trame suivante comme position actuelle ; et
dans le cas où il est détecté que l'opération tactile est terminée, déterminer par le dispositif de projection holographique le moment cible dans la période de trame actuelle comme quatrième moment, et déterminer la position actuelle comme quatrième position,
dans lequel il est déterminé que l'opération tactile est terminée dans le cas où une zone d'une région d'action du point tactile sur le panneau tactile (104) est inférieure à un cinquième seuil.

2. Procédé selon la revendication 1, dans lequel, après la reconnaissance (S202), par le dispositif de projection holographique, de l'opération tactile selon les informations tactiles, le procédé comprend en outre les étapes suivantes :
obtenir, par le dispositif de projection holographique, une région d'action de l'interaction entre le point tactile et le panneau tactile (104) ; et
déterminer, par le dispositif de projection holographique, selon une position de la région d'action sur le panneau tactile (104), des informations interactives demandées par la demande d'interaction.

3. Procédé selon la revendication 2, dans lequel la détermination, par le dispositif de projection holographique selon une position de la région d'action sur le panneau tactile (104), d'informations interactives demandées par la demande d'interaction comprend les étapes suivantes :
déterminer, par le dispositif de projection holographique, selon la position de la région d'action sur le panneau tactile (104), une partie de personnage du personnage virtuel en projection holographique pour l'interaction, et déterminer, selon la partie de personnage, les informations interactives demandées par la demande d'interaction ; et/ou,
déterminer, par le dispositif de projection holographique selon la position de la région d'action sur le panneau tactile (104), un type d'interaction de l'interaction avec le personnage virtuel en projection holographique, et déterminer, selon le type d'interaction, les informations interactives demandées par la demande d'interaction.

4. Procédé selon l'une des revendications 1 à 3, dans lequel la commande (S206), par le dispositif de projection holographique, du personnage virtuel en projection holographique pour qu'il réalise une action interactive appariée avec la demande d'interaction comprend les étapes suivantes :
commander, par le dispositif de projection holographique, le personnage virtuel en projection holographique pour jouer une animation appariée avec la demande d'interaction ; et/ou,
commander, par le dispositif de projection holographique, le personnage virtuel en projection holographique pour jouer un audio apparié avec la demande d'interaction.

5. Procédé selon l'une des revendications 1 à 3, comprenant en outre les étapes suivantes :
ajuster, par le dispositif de projection holographique, un paramètre d'affection du personnage virtuel en projection holographique ; et
commander, par le dispositif de projection holographique, un mode de réponse de personnage du personnage virtuel en projection holographique, et/ou,
activer, par le dispositif de projection holographique, une compétence cachée du personnage virtuel en projection holographique dans une scène virtuelle, dans le cas où il est déterminé que le paramètre d'affection atteint une valeur cible.

6. Support de stockage sur lequel est stocké un programme informatique, le programme informatique, lorsqu'il est exécuté, réalisant le procédé de commande interactive selon l'une des revendications 1 à 5.

7. Dispositif électronique, comprenant une mémoire et un processeur, la mémoire stockant un programme informatique, le processeur étant configuré pour réaliser le procédé de commande interactive selon l'une des revendications 1 à 5 en utilisant le programme informatique.
